# EUROPÄISCHE PATENTSCHRIFT

(11) **EP 2 247 834 B1**
(45) Veröffentlichungstag und Bekanntmachung des Hinweises auf die Patenterteilung: **02.11.2011**
(21) Anmeldenummer: 09715110.4
(22) Anmeldetag: 05.01.2009
(51) Int. Cl.: F01N 3/20, F16L 11/127

(54) **ABGASNACHBEHANDLUNGSSYSTEM MIT VERBESSERTEM HEIZKONZEPT**
EXHAUST GAS POST-TREATMENT SYSTEM HAVING IMPROVED HEATING CONCEPT
SYSTÈME DE RETRAITEMENT DE GAZ D'ÉCHAPPEMENT AVEC CONCEPT AMÉLIORÉ DE CHAUFFAGE

(30) Priorität: 27.02.2008 DE 102008011464
(43) Veröffentlichungstag der Anmeldung: 10.11.2010
(73) Patentinhaber: Robert Bosch GmbH, 70442 Stuttgart (DE)
(72) Erfinder: KLENK, Wolfgang, 74369 Loechgau (DE); FRISSE, Hans-Peter, 74354 Besigheim (DE)
(86) Internationale Anmeldenummer: PCT/EP2009/050045
(87) Internationale Veröffentlichungsnummer: WO 2009/106373

(56) Entgegenhaltungen:
- EP-A- 1 473 447
- DE-U1-202006 001 760
- FR-A- 2 874 075

## Beschreibung

### Stand der Technik

Die Erfindung geht aus von bekannten Verfahren und Vorrichtungen zur Nachbehandlung von Abgasen, insbesondere von Abgasen von Brennkraftmaschinen, beispielsweise im Automobilbereich, in der Energieerzeugung oder in ähnlichen Bereichen der Naturwissenschaft und Technik.

Aus derartigen Bereichen sind Techniken bekannt, bei welchen schadstoffvermindernde Medien, insbesondere fluide Medien (beispielsweise Flüssigkeiten oder Gase), in das Abgas eindosiert, beispielsweise eingesprüht, werden. Dabei werden unterschiedliche Techniken und unterschiedliche Arten von Medien eingesetzt, welche beispielsweise in DE 10 2004 004 738 A1 beschrieben sind.

Ein wesentliches Anwendungsbeispiel, auf welches die vorliegende Erfindung jedoch nicht beschränkt ist, ist das Einsprühen einer Harnstoff-Wasser-Lösung (HWL) in das Abgas von Dieselmotoren, um den Anteil der Stickoxide (NOx) im Abgas zu vermindern. Dabei wird in einer Reduktionsreaktion das NOx unter Bildung von Stickstoff und Wasser zu N20 reduziert. Bei PKW-Systemen kann beispielsweise eine ausreichende Menge an HWL in einem Tank bevorratet werden, mit der das Fahrzeug während eines Wartungsintervalls (beispielsweise bis zum nächsten Ölwechsel) betrieben werden kann. Anstelle von HWL sind auch andere Reduktionsmittel und/oder Reduktionsmittel-Vorläufer (welche sich beispielsweise erst im Abgas oder im Bereich des Abgases zum Reduktionsmittel umsetzen) bekannt.

Derartige Verfahren werden oft auch als SCR-Verfahren (SCR: selective catalytic reduction) bezeichnet. Durch die selektive katalytische Reduktion werden beispielsweise Stickoxide mit hoher Selektivität zu Stickstoff reduziert, wodurch die Stickoxidkonzentration im Abgas deutlich verringert werden kann. Harnstoff-Wasser-Lösungen als Beispiele für Reduktionsmittel sind beispielsweise unter dem Markennamen "AdBlue" erhältlich. Durch thermische Zersetzung des Harnstoffs entsteht aus dem Harnstoff als Reduktionsmittel-Vorläufer das eigentliche Reduktionsmittel, nämlich gasförmiger Ammoniak.

Neben Verfahren und Vorrichtungen, welche auf der Verwendung von Reduktionsmitteln oder Reduktionsmittel-Vorläufern als schadstoffvermindernden Medien basieren, sind auch andere Arten von schadstoffvermindernden Medien bekannt. So wird beispielsweise, ebenfalls in DE 10 2004 004 738 A1, die nachmotorische Erwärmung von Abgas durch Einspritzen von Kraftstoff in den Abgasstrang beschrieben, wodurch die zur Regeneration von nachgeschalteten Katalysatoren oder Dieselpartikelfiltern erforderlichen Abgastemperaturen erreicht werden. Hierbei handelt es sich also um ein Beispiel eines "indirekt" schadstoffvermindernden Mediums, dessen Einbringung in das Abgas jedoch ebenfalls allgemein dem Zweck der kurzfristigen, mittelfristigen oder langfristigen Schadstoffverminderung dient. Zahlreiche andere Ausführungsbeispiele schadstoffvermindernder Medien sind bekannt.

Bei bekannten Dosiervorrichtungen, wie beispielsweise der DE 10 2004 004 738 A1, wird in der Regel ein Dosiermodul verwendet, welches beispielsweise ein Dosierventil zum Erzeugen eines Sprays, eines Strahls, eines Nebels oder einer anderen Art von Strahl oder Wolke des schadstoffvermindernden Mediums enthält. Das Dosiermodul kann beispielsweise mit einem entsprechenden Tank zur Aufnahme des schadstoffvermindernden Mediums verbunden sein, wobei sinngemäß auch mehrere schadstoffvermindernde Medien in Kombination oder sequenziell verwendet werden können.

Insbesondere bei den genannten Harnstoff Wasser-Lösungen, jedoch auch bei anderen Arten von schadstoffvermindernden Medien, welche beispielsweise in zeitlichen Intervallen in die Abgase eingespritzt werden können, stellt die Frostsicherheit eine erhebliche Herausforderung dar. So gefriert beispielsweise AdBlue bei ca. -10°C bis -11°C. Um den Fahrzeugbetrieb auch bei niedrigen Temperaturen sicherzustellen und gefrorene HWL auch in ausreichendem Maße aufzutauen, wird bei bekannten PKW-Systemen typischerweise eine elektrische Heizung in bzw. um den HWL-Tank eingesetzt.

Heizungen die innerhalb des Tanks platziert werden, sind jedoch durch aufwändige Schutzmaßnahmen gegen die flüssige HWL und gegen Eisdruck zu schützen. Da HWL extrem kriechfähig ist und viele Stoffe zersetzt, ist der Einbau der Heizung innerhalb des Tanks vergleichsweise aufwändig. Wird hingegen die Heizung auf der Außenfläche des Tanks, welcher üblicherweise aus Kunststoff hergestellt wird, montiert, so stellt die Wärmeleitfähigkeit des Kunststoffs eine deutliche Barriere für den Wärmetransport dar. Hohe Temperaturdifferenzen zwischen der Tankwand außen und innen, die trotzdem einen hohen Wärmetransport ermöglichen würden, sind aufgrund der Temperaturgrenzen des Kunststoffes in der Regel nicht möglich.

Die DE 20 2006 001 760 beschreibt einen Reduktionsmittelbehälter, der zumindest teilweise Polyoxymethylen aufweist und in dessen Begrenzungswand ein Heizelement integriert ist.

### Offenbarung der Erfindung

Die Erfindung schlägt daher eine Dosiervorrichtung zum Einbringen eines schadstoffvermindernden Mediums vor, welche die oben beschriebenen Nachteile bekannter Dosiervonichtungen zumindest weitgehend vermeidet. Die Dosiervorrichtung kann insbesondere zum Einbringen eines Reduktionsmittels und/oder eines Reduwionsmittels-Vorläufers in ein Abgas, insbesondere in ein durch ein Strömungsrohr strömendes Abgas, eingesetzt werden. Diesbezüglich kann insbesondere auf die oben ausgeführten Möglichkeiten zur Ausgestaltung des schadstoffvermindernden Mediums verwiesen werden.

Die Dosiervorrichtung umfasst ein Versorgungssystem zum Bereitstellen des schadstoffvermindernden Mediums. Das Versorgungssystem weist mindestens einen Voratstank zur Aufnahme eines Vorrats des mindestens einen schadstoffvermindernden Mediums auf. Naturgemäß können auch mehrere schadstoffvermindernde Medium und/oder mehrere Vorratstanks eingesetzt werden. Neben dem Versorgungssystem kann die Dosiervorrichtung optional weitere Elemente umfassen, beispielsweise Leitungen, Pumpen, Ventile, Steuerungselemente und/oder Steuerungen sowie ein oder mehrere Dosiermodule.

Erfingdungsgemäß ist der Vorratstank derart ausgestaltet, dass dieser eine Tankwand aufweist. Diese Tankwand soll in einem Schichtaufbau hergestellte sein und weist mindstens eine einer Tankinnenseite (also dem bevorrateten schadstoffvermindernden Medium) zuweisende Schutzschicht, mindestens eine Heizschicht und mindestens eine einer Tankaußenseite zuweisende Außenschicht auf.

Mittels der Erfindung lassen sich insbesondere dünne, flächige Heizungen realisieren, welche beispielsweise einen Flächenheizer mit einem Heizelement mit einem positiven Temperaturkoeffizienten (PTC-Flächenheizer) umfassen können. So umfasst die Heizschicht insbesondere mindestens ein Flächenheizelement, insbesondere ein Flächenheizelement mit mindestens einem gedruckten Heizelement.

Unter einem "Flächenheizelemenr" ist dabei ein Heizelement zu verstehen, dessen laterale Ausdehnungen seine Dicke um ein Vielfaches übersteigen, beispielsweise um mindestens das 10-bis 100-fache. Das Flächenheizelement ist insbesondere als Heizfolie ausgestaltet, wobei unter eine Heizfolie ein zumindest teilweise flexibles Flächenheizelement zu verstehen ist. Diese Heizfolie kann beispielsweise mindestens eine der Tankinnenseite zuweisende Trägerfolie aufweisen, welche insbesondere einen Bestandteil der Schutzschicht bilden kann. Das Heizelement kann insbesondre als gedrucktes Heizelement in beispielsweise einer Mäanderform, einer Spiralform oder einer sonstigen Form eines Heizwiderstandes ausgestaltet sein.

Die genannten Schichten können ihrerseits jeweils auch mehrere Schichten umfassen. Weiterhin können die Schutzschicht und die Heizschicht auch ganz oder teilweise zusammengefasst sein, beispielsweise indem beide Schichten durch eine Heizfolie realisiert werden, umfassend beispielsweise eine Trägerfolie, welche der Schutzschicht zuzuordnen ist, und welche der Tankinnenseite zuweist und ein Heizelement, welches auf die Trägerfolie aufgebracht ist und der Heizschicht zuzuordnen ist.

Das Flächenheizelement, insbesondere die Heizfolie, kann als Heizlage in einen aus mehreren Schichten aufgebauten Kunststofftank eingebracht sein. Wie unten ausgeführt, bietet sich hierfür insbesondere ein Laminierverfahren an.

Die Schutzschicht sollte insbesondere gegenüber dem schadstoffvermindernden Medium eine hohe Beständigkeit aufweisen, beispielsweise eine Beständigkeit gegen eine HWL. Die Schutzschicht kann insbesondere derart ausgestaltet sein, dass diese die Heizschicht vorzugsweise vollständig gegenüber dem schadstoffvermindernden Medium abschirmt. Auf diese Weise kann beispielsweise eine HWL von Widerstandsbahnen ferngehalten werden. So können beispielsweise auch nicht gegenüber dem schadstoffvermindernden Medium resistente Materialien für die Heizschicht eingesetzt werden.

Dementsprechend ist es bevorzugt, wenn die Schutzschicht und/oder eine Kombination aus Schutzschicht und Heizschicht, beispielsweise eine Heizfolie, weiterhin auch abdichtende Eigenschaften gegenüber dem schadstoffvetmindemden Medium beispielsweise abdichtende Eigenschaften gegenüber einer Flüssigkeit (beispielsweise HWL) aufweisen. Auf diese Weise fungiert die Schutzschicht und/oder eine Kombination aus Schutzschicht und Heizschicht insgesamt beispielsweise zumindest teilweise als Dichtschicht.

Die Kontaktierung der Heizschicht bzw. mindestens eines Heizelements der Heizschicht kann insbesondere von der Außenseite des Vorratstanks erfolgen. Zu diesem Zweck können beispielsweise durch die Tankwand ein oder mehrere Durchführungen vorgesehen sein, mittels derer entsprechende Zuleitungen zu dem Heizelement und/oder der Heizschicht geführt werden können. Die Dichtigkeit dieser Durchführung durch die Außenschicht kann auf der Tankinnenseite durch die Schutzschicht und/oder eine Kombination aus Schutzschicht und

Heizschicht gewährleistet werden. Die Kontaktierung der Heizung auf der Außenseite des Vorratstanks und damit auf der von dem schadstoffvermindernden Medium abgewandten Seite gewährleistet eine einfache und sichere Beaufschlagung der Heizung mit elektrischer Energie.

Der beschriebene Schichtaufbau gewährleistet, dass die beschriebene Heizung einerseits geschützt gegen das schadstoffvermindernde Medium, insbesondere gegen HWL, arbeiten kann, jedoch gleichzeitig mit hoher Effizienz und gutem Wärmekontakt zum schadstoffvermindernen Medium betrieben werden kann.

Um diese Eigenschaften weiter zu verbessern, ist es besonders bevorzugt, wenn die Heizung derart in Tankwand integriert ist, dass diese nach innen eine gute und nach außen eine weniger gute Wärmeübertragung bewirkt. Zu diesem Zweck kann insbesondere die Schutzschicht eine Dicke D1 zwischen 100 Mikrometern und 2 mm aufweisen. Die Heizschicht kann insbesondere eine Dicke D2 zwischen 10 Mikrometern und 1 mm aufweisen. Die Außenschicht weist vorzugsweise eine Dicke D3 zwischen 2 mm und 20 mm auf.

Auf diese Weise wird die Heizschicht vorzugsweise durch eine oder nur durch wenige dünne Schichten der Tankwand von dem schadstoffvermindernden Medium getrennt. Dementsprechend klein ist der Wärmeleitwiderstand dieser Schichten, so dass die Heizschicht und das schadstoffvermindernde Medium in einem guten Wärmekontakt zueinander stehen. Selbst bei niedrigen Temperaturen der Heizschicht selbst wird dann eine hohe Energiemenge an das schadstoffermindernde Medium übertragen.

Auf der Außenseite der Heizschicht, in der Außenschicht, können die restlichen, beispielsweise für die mechanische Festigkeit des Vorratstanks erforderlichen Schichten der Tankwand realisiert werden. Dementsprechend ist es bevorzugt, wenn die Außenschicht insgesamt eine hohe mechanische Festigkeit bei gleichzeitig hohem thermischen Widerstand aufweist. Dementsprechend kann die Außenschicht zumindest teilweise thermisch isolierende Eigenschaften aufweisen. Zu diesem Zweck kann die Außenschicht beispielsweise ein Außenschichtmaterial aufweisen, welches einen kleineren Wärmeleitkoeffizienten aufweist als ein Schutzschichtmaterial der Schutzschicht.

Die Dosiervorrichtung bzw. der Vorratstank können insbesondere in einem schichtweisen Verfahren hergestellt werden. Dabei können die einzelnen beschriebenen Schichten nacheinander oder gleichzeitig hergestellt werden und anschließend zusammengefügt werden. Ein erstes Verfahren besteht beispielsweise darin, zunächst die Außenschicht mit den formgebenden Eigenschaften herzustellen, beispielsweise in einem Spritzgieß- und/oder Tiefziehverfahren. Zu diesem Zweck können beispielsweise gängige Kunststoffe eingesetzt werden, beispielsweise Polyamide, Polypropylene oder ähnliche Kunststoffe.

Parallel hierzu oder unabhängig davon kann beispielsweise eine Heizfolie hergestellt werden, mit einer Trägerfolie als Bestandteil der Schutzschicht und einem auf diese Trägerfolie aufgedruckten Flächenheizelement, beispielsweise in Form von mäanderförmig gedruckten Heizbahnen. Die Trägerfolie kann beispielsweise mit selbstklebenden Eigenschaften ausgestattet sein oder kann laminierfähige Eigenschaften aufweisen. Anschließend kann diese Heizfolie, mit dem Flächenheizelement voran, auf die Innenseite der Außenschicht aufgebracht werden und mit dieser verbunden werden. Hierzu eignen sich insbesondere Klebeverfahren und/oder Laminierverfahren. Auf diese Weise lassen sich einfach, kostengünstig und schnell Vorratstanks der beschriebenen Art herstellen.

### Kurze Beschreibung der Zeichnungen

Ausführungsbeispiele der Erfindung sind in den Zeichnungen dargestellt und in der nachfolgenden Beschreibung erläutert.

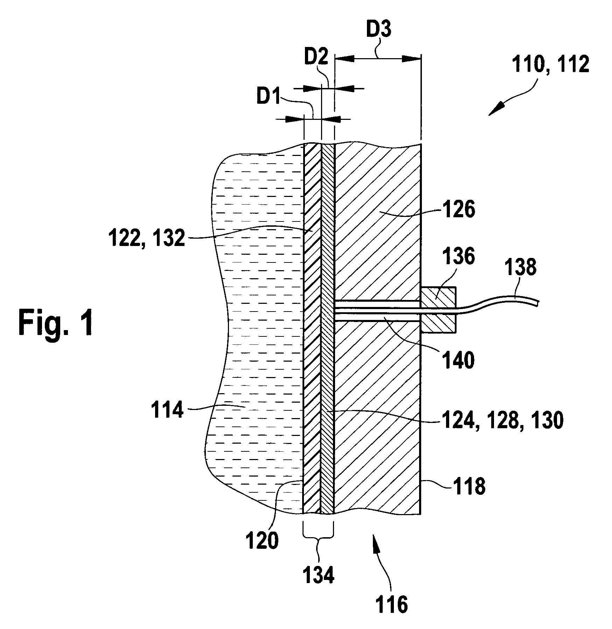

Die Figur 1 zeigt eine stark schematisierte Schnittdarstellung eines Ausschnitts eines erfindungsgemäßen Vorratstanks einer Dosiervorrichtung.

In Figur 1 ist ein Ausschnitt einer Dosiervorrichtung 110 bzw. eines Vorratstanks 112 dieser Dosiervorrichtung stark schematisiert in Schnittdarstellung von der Seite gezeigt. Der Vorratstank dient der Bevorratung einer Menge eines schadstoffvermindernden Mediums 114, welches im vorliegenden Ausführungsbeispiel flüssig ist. Beispielsweise kann es sich um eine HWL handeln.

Der Vorratstank 112 umfasst eine Tankwand 116 mit einer Außenseite 118 und einer dem schadstoffvermindernden Medium 114 zuweisenden Innenseite 120. Die Innenseite 120 der Tankwand 116 steht dabei unmittelbar in Kontakt mit dem schadstoffvermindernden Medium 114.

Die Tankwand 116 weist einen Schichtaufbau auf. Dieser Schichtaufbau setzt sich aus einer Schutzschicht 122, einer Heizschicht 124 und einer Außenschicht 126, jeweils mit den Schichtdicken D1, D2 und D3, zusammen, wobei die Außenschicht 126 der Außenseite 118, und die Schutzschicht 122 der Innenseite 120 zuweisen. Die Heizschicht 124 ist somit sandwich-artig zwischen der Schutzschicht 122 und der Außenschicht 126 eingebettet. Naturgemäß sind auch Aufbauten mit mehreren Einzelschichten für jede einzelne der Schichten 122 bis 126 möglich.

Die Heizschicht 124 umfasst ein Flächenheizelement 128. Dieses Flächenheizelement 128 kann beispielsweise eine Dicke D2 von ca. 10 bis 50 Mikrometern aufweisen. Das Flächenheizelement 128 kann beispielsweise als gedrucktes Heizelement 130 ausgestaltet sein und kann Heizbahnen bzw. Widerstandsbahnen umfassen, welche beispielsweise metallische Nebengruppenelemente umfassen können.

Dieses gedruckte Heizelement 130 kann beispielsweise auf eine Trägerfolie 132 aufgedruckt sein, welche der Innenseite 120 der Tankwand 116 zuweist. Die Trägerfolie 132, welche beispielsweise eine Polyimid Folie (beispielsweise eine Kapton-Folie) umfassen kann, kann Bestandteil der Schutzschicht 122 sein bzw. diese Schutzschicht 122 bilden. Die Trägerfolie 132 kann beispielsweise eine Dicke D1 von ca. 150 Mikrometern aufweisen.

Weiterhin kann die Trägerfolie 132 mit selbstklebenden Eigenschaften ausgestattet sein. Die Trägerfolie 132 und das auf die Trägerfolie 132 aufgedruckte Heizelement 130 bilden dann vorzugsweise gemeinsam eine Heizfolie 134. Diese Heizfolie 134 kann beispielsweise auf die Innenseite der Außenschicht 126 aufgeklebt, auflaminiert oder durch andere stoffschlüssige und/oder formschlüssige und/oder kraftschlüssige Verfahren aufgebracht werden.

Wie aus Figur 1 erkennbar ist, überschreitet die Dicke D3 der Außenschicht 126 die Dicken D1 und D2 erheblich. Beispielsweise kann die Dicke D3, welche wesentlich beispielsweise für die Formstabilität des Vorratstanks 112 verantwortlich ist, im Bereich von 3 bis 7 mm liegen. Auf diese Weise ist zudem eine hohe thermische Isolation der von der Heizschicht 124 abgegebenen Wärme nach außen hin gewährleistet. Aufgrund der geringen Dicke D 1 der Schutzschicht 122 ist jedoch ein guter Wärmeübertrag hin zum schadstoffvermindernden Medium 114 gegeben.

Weiterhin weist der Vorratstank 112 bei dem in Figur 1 dargestellten Ausführungsbeispiel eine Kontaktierung 136 auf der Außenseite 118 der Tankwand 116 auf. Diese Kontaktierung 136 dient der Beaufschlagung des gedruckten Heizelements 130 mit elektrischer Energie. Die Kontaktierung 136 ist beispielsweise über eine oder mehrere Anschlussleitungen 138 mit dem gedruckten Heizelement 130 verbunden. Diese Anschlussleitungen 138 sind durch eine oder mehrere Bohrungen 140 in der Tankwand 116 bzw. in der Außenschicht 126 geführt.

Alternativ oder zusätzlich zur Verwendung von Bohrungen kann auch ein Eingießen oder Umspritzen der Anschlussleitungen 138 erfolgen. Im Falle der Verwendung von Bohrungen 140 dient die Schutzschicht 122 auch einer Abdichtung der Bohrungen 140 nach innen hin, also gegenüber dem schadstoffvermindernden Medium 114. Zusätzlich zu der Trägerfolie 132 kann die Schutzschicht 122 auch weitere Schichten umfassen, so dass beispielsweise auf der dem schadstoffvermindernden Medium 114 zuweisenden Seite eine zusätzliche Schicht auf diese Trägerfolie 132 aufgebracht sein kann, beispielsweise um die abdichtenden Eigenschaften zu erhöhen.

## Patentansprüche

1. Dosiervorrichtung (110) zum Einbringen eines schadstoffvermindernden Mediums (114), insbesondere eines Reduktionsmittels und/oder eines Reduktionsmittel-Vorläufers, in ein durch ein Strömungsrohr strömendes Abgas, umfassend ein Versorgungssystem zum Bereitstellen des schadstoffvermindernden Mediums (114) mit mindestens einem Vorratstank (112) zur Aufnahme eines Vorrats des schadstoffvermindernden Mediums (114), wobei der Vorratstank (112) eine Tankwand (116) aufweist, wobei die Tankwand (116) einen Schichtaufbau aufweist, mit mindestens einer ersten, einer Tankinnenseite (120) zuweisenden Schutzschicht (122), mindestens einer Heizschicht (124) und mindestens einer Tankaußenseite (118) zuweisenden Außenschicht (126), wobei die Heizschicht (124) mindestens ein Flächenheizelement (128) umfasst, insbesondere ein Flächenheizelement (128) mit mindestens einem gedruckten Heizelement (130), wobei die Heizschicht (124) und/oder die Schutzschicht (122) mindestens eine Heizfolie (134) ganz oder teilweise umfasst.

2. Dosiervorrichtung (110) nach Anspruch 1, wobei die Heizfolie (130) mindestens eine der Tankinnenseite (120) zuweisende Trägerfolie (132) aufweist, wobei die Trägerfolie (132) einen Bestandteil der Schutzschicht (122) bildet.

3. Dosiervorrichtung (110) nach einem der vorhergehenden Ansprüche, wobei die Schutzschicht (122) eine Dicke D1 zwischen 100 Mikrometern und 1 mm aufweist.

4. Dosiervorrichtung (110) nach einem der vorhergehenden Ansprüche, wobei die Heizschicht (124) eine Dicke D2 zwischen 10 Mikrometern und 1 mm aufweist.

5. Dosiervorrichtung (110) nach einem der vorhergehenden Ansprüche, wobei die Außenschicht (126) eine Dicke D3 zwischen 2 mm und 20 mm aufweist.

6. Dosiervorrichtung (110) nach einem der vorhergehenden Ansprüche, wobei die Außenschicht (126) zumindest teilweise thermisch isolierende Eigenschaften aufweist.

7. Dosiervorrichtung (110) nach einem der vorhergehenden Ansprüche, wobei die Außenschicht (126) mindestens Außenschichtmaterial aufweist, wobei die Schutzschicht (122) mindestens ein Schutzschichtmaterial aufweist, wobei das Außenschichtmaterial einen kleineren Wärmeleitkoeffizienten aufweist als das Schutzschichtmaterial.

8. Dosiervorrichtung (110) nach einem der vorhergehenden Ansprüche, wobei die Heizschicht (124) zumindest teilweise durch die Außenschicht (126) hindurch elektrisch kontaktiert ist.

9. Dosiervorrichtung (110) nach einem der vorhergehenden Ansprüche, wobei der Schichtaufbau zumindest teilweise in einem Laminierverfahren hergestellt ist.

## Claims

1. Metering device (110) for introducing a pollutant-reducing medium (114), in particular a reducing agent and/or a reducing agent precursor, into an exhaust gas flowing through a flow pipe, comprising a supply system for providing the pollutant-reducing medium (114), with at least one storage tank (112) for receiving a quantity of the pollutant-reducing medium (114) to be stored, the storage tank (112) having a tank wall (116) and the tank wall (116) having a layer structure, with at least one first protective layer (122), facing an inner side of the tank (120), at least one heating layer (124) and at least one outer layer (126), facing an outer side of the tank (118), the heating layer (124) comprising at least one surface heating element (128), in particular a surface heating element (128) with at least one printed heating element (130), the heating layer (124) and/or the protective layer (122) entirely or partially comprising at least one heating foil (134).

2. Metering device (110) according to Claim 1, the heating foil (134) having at least one carrier foil (132), facing the inner side of the tank (120), the carrier foil (132) constituting part of the protective layer (122).

3. Metering device (110) according to one of the preceding claims, the protective layer (122) having a thickness D1 of between 100 micrometres and 1 mm.

4. Metering device (110) according to one of the preceding claims, the heating layer (124) having a thickness D2 of between 10 micrometres and 1 mm.

5. Metering device (110) according to one of the preceding claims, the outer layer (126) having a thickness D3 of between 2 mm and 20 mm.

6. Metering device (110) according to one of the preceding claims, the outer layer (126) at least partially having thermally insulating properties.

7. Metering device (110) according to one of the preceding claims, the outer layer (126) comprising at least one outer layer material, the protective layer (122) comprising at least one protective layer material, the outer layer material having a smaller coefficient of thermal conduction than the protective layer material.

8. Metering device (110) according to one of the preceding claims, the heating layer (124) being at least partially electrically contacted through the outer layer (126).

9. Metering device (110) according to one of the preceding claims, the layer structure being at least partially produced in a laminating process.

## Revendications

1. Dispositif de dosage (110) destiné à apporter un fluide (114) diminuant les substances nocives, notamment d'un agent de réduction et/ou d'un précurseur d'agent de réduction dans les gaz d'échappement qui s'écoulent dans un tube d'écoulement, le dispositif comportant un système d'alimentation qui délivre le fluide (114) diminuant les substances nocives et qui présente au moins une cuve de réserve (112) qui reprend une réserve du fluide (114) diminuant les substances nocives, la cuve de réserve (112) présentant une paroi (116), la paroi (116) de la cuve présentant une structure stratifiée comportant au moins une première couche de protection (122) tournée vers l'intérieur (120) de la cuve, au moins une couche chauffante (124) et au moins une couche extérieure (126) tournée vers l'extérieur (118) de la cuve, la couche chauffante (124) comportant au moins un élément chauffant plat (128) et en particulier un élément chauffant plat (128) doté d'au moins un élément chauffant (130) imprimé, la couche chauffante (124) et/ou la totalité ou une partie de la couche de protection (122) comportant un film chauffant (134).

2. Dispositif de dosage (110) selon la revendication 1, dans lequel le film chauffant (134) présente au moins un film de support (132) tourné vers l'intérieur (120) de la cuve, le film de support (132) faisant partie de la couche de protection (122).

3. Dispositif de dosage (110) selon l'une des revendications précédentes, dans lequel la couche de protection (122) a une épaisseur D1 comprise entre 100 micromètres et 1 mm.

4. Dispositif de dosage (110) selon l'une des revendications précédentes, dans lequel la couche chauffante (124) a une épaisseur D2 comprise entre 10 micromètres et 1 mm.

5. Dispositif de dosage (110) selon l'une des revendications précédentes, dans lequel la couche extérieure (126) a une épaisseur D3 comprise entre 2 mm et 20 mm.

6. Dispositif de dosage (110) selon l'une des revendications précédentes, dans lequel au moins une partie de la couche extérieure (126) présente des propriétés d'isolation thermique.

7. Dispositif de dosage (110) selon l'une des revendications précédentes, dans lequel la couche extérieure (126) présente au moins un matériau de couche extérieure, la couche de protection (122) présente au moins un matériau de couche de protection, le matériau de couche extérieure présentant un coefficient de conduction thermique inférieur à celui du matériau de couche de protection.

8. Dispositif de dosage (110) selon l'une des revendications précédentes, dans lequel au moins une partie de la couche chauffante (124) est raccordée électriquement à travers la couche extérieure (126).

9. Dispositif de dosage (110) selon l'une des revendications précédentes, dans lequel la structure stratifiée est réalisée au moins en partie par une opération de stratification.
